# EUROPEAN PATENT APPLICATION

(11) **EP 3 363 965 A1**
(43) Date of publication of application: **22.08.2018**
(21) Application number: 18157449.2
(22) Date of filing: 19.02.2018
(51) Int. Cl.: E04G 5/06, E04G 7/14, E04G 7/16, F16B 7/00

(54) **CLAMP, PARTICULARLY FOR CONSOLES ATTACHED ON SCAFFOLDING FOR THE BUILDING SECTOR**

(30) Priority: 20.02.2017 IT 201700018431
(71) Applicant: Gabri, Alessandro, 21040 Castronno VA (IT)
(72) Inventor: GABRI, Alessandro, 21040 CASTRONNO VA (IT); RABUFFETTI, Sergio, 21040 CASTRONNO VA (IT)
(74) Representative: Modiano, Micaela Nadia

(57) **Abstract**

A clamp (1), particularly for providing stands for use in scaffolding for the building sector, which comprises a first body (2) and a second body (3) which are adapted to be hinged at one end, the first and second bodies (2, 3) being substantially C-shaped and being adapted to be arranged around a tubular element (20, 21), locking means (11) being provided for locking the first and second bodies to each other around the tubular element (20, 21).

## Description

The present invention relates to a clamp, particularly for providing stands for scaffolding for the building sector.

As is known, the scaffolding used in the building sector are usually provided by stands constituted by tubular structures with two vertical posts, a connecting cross-member and oblique cross-members connected to the vertical posts. These stands serve to provide a scaffolding resting on the ground.

The drawback of using conventional stands is constituted by the fact that such stands are fixed structures and cannot be dismantled, and therefore they occupy a considerable space both when they need to be stored in a warehouse and when they need to be loaded on a truck in order to be brought to the site where the scaffolding is to be built.

The stands used for conventional scaffolding are furthermore provided so that the connections between the stands must be provided by way of tie rods with adapted fastenings.

The aim of the present invention is to provide a joint, particularly in order to provide stands for scaffolding for the building sector, which makes it possible to provide a stand that can be completely disassembled and assembled extremely rapidly and, as a consequence, a scaffolding that can be erected and dismantled rapidly.

Within this aim, an object of the present invention is to provide a clamp, particularly for stands for use in scaffolding for the building sector, which makes it possible to assemble a stand extremely rapidly and without having to screw bolts and the like.

Another object of the present invention is to provide a stand for use in scaffolding in the building sector which is easy to assemble, strong and stable.

A still further object of the present invention is to provide a clamp and a corresponding stand that are highly reliable, easily and practically implemented and low cost.

This aim and these and other objects which will become better apparent hereinafter are achieved by a clamp, particularly for providing stands for use in scaffolding for the building sector, characterized in that it comprises a first body and a second body which are adapted to be hinged at one end, said first and second bodies being substantially C-shaped and being adapted to be arranged around a tubular element, locking means being provided for locking said first and second bodies to each other around said tubular element.

Further characteristics and advantages of the invention will become better apparent from the detailed description of a preferred, but not exclusive, embodiment of the clamp according to the present invention, illustrated by way of non-limiting example in the accompanying drawings wherein:

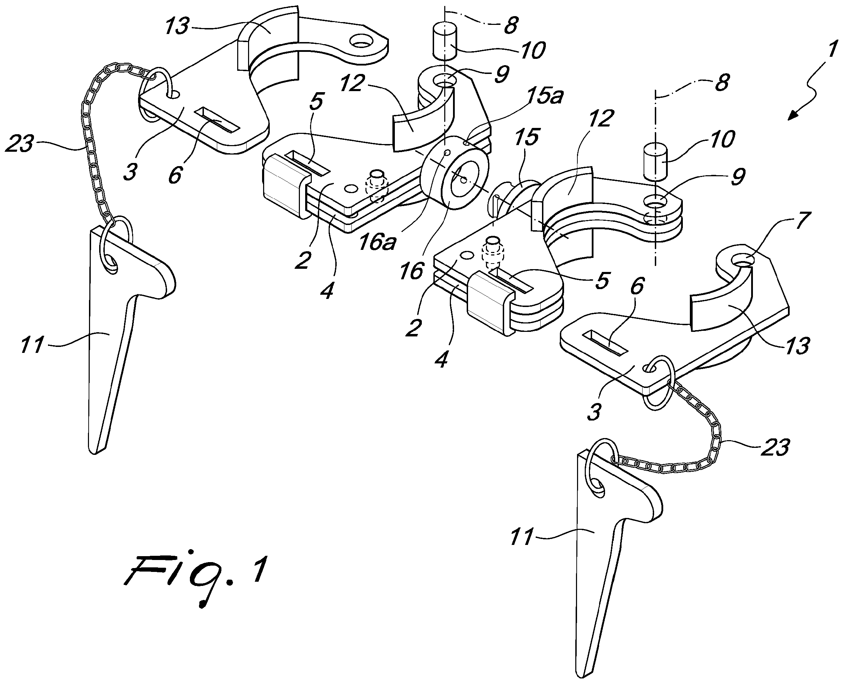

Figure 1 is a perspective view of a pair of clamps according to the present invention, in the open condition;
Figure 2 is a plan view of the clamps in Figure 1, in a configuration with one clamp open and one closed;
Figure 3 is a plan view of the clamps in Figures 1 and 2, in the closed configuration;
Figure 4 is a perspective view of the clamps in the previous figures, which are applied to a pair of tubular elements;
Figure 5 is a perspective view of a pair of clamps according to the invention which are applied to a pair of tubular elements with the tubular elements angled with respect to each other;
Figure 6 is a perspective view, with parts in dotted lines, of the provision of a stand using the clamp according to the present invention;
Figure 7 is a perspective view, with parts in dotted lines, of the stand in Figure 6 with the clamp in the closed condition;
Figure 8 is a perspective view of an embodiment of a railing using a pair of clamps for each side of the stand;

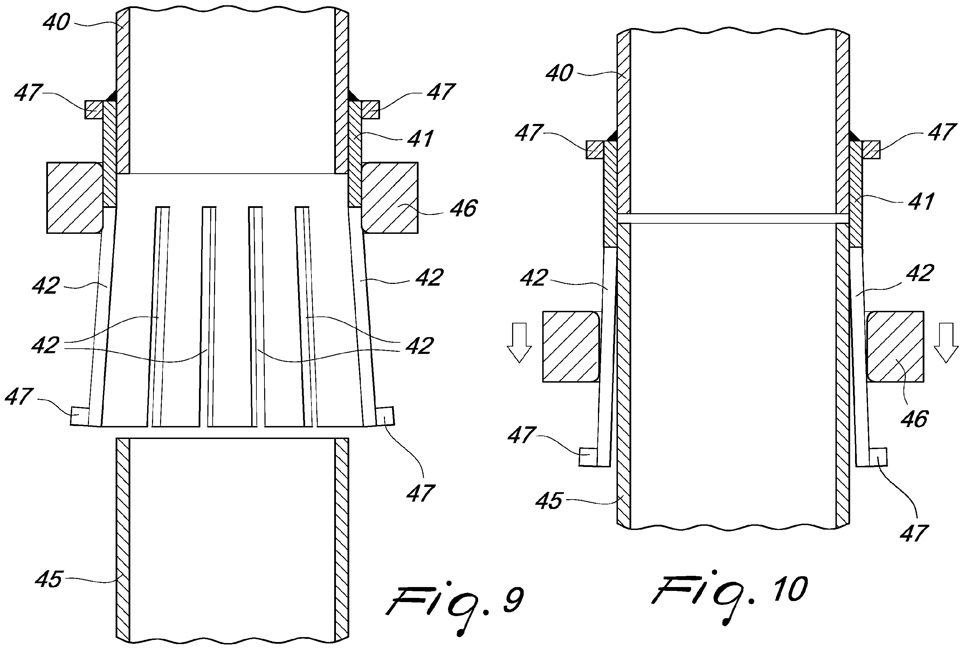

Figure 9 is an exploded view of a type of head coupling between two tubular elements;
Figure 10 shows the coupling in Figure 9 in the assembled condition;
Figure 11 is a perspective view of the provision of a stand using the clamp according to the present invention, according to a variation of embodiment.

With reference to the figures, the clamp according to the invention, generally designated by the reference numeral 1, comprises a first body 2 and a second body 3, the first body 2 being substantially C-shaped, and presenting a slot 4 which is adapted to allow the insertion of the second body 3 so that the slits 5 of the first body 2 and 6 of the second body 3 are positioned so that one coincides with the other.

Furthermore, the second body 3 could have, at the opposite end of the slit 6, a hole 7 which is adapted to be positioned with its axis coinciding with the axis 8 of a hole 9 of the first body 2 so that a cylinder-shaped locking element 10 can be inserted by pressure into the holes 9 and 7, thus immobilizing the clamp at its end so as to permit an opening thereof about the plane of rotation constituted by the locking element 10.

The clamp according to the invention further has locking means 11 which are constituted for example by a wedge-shaped element that is adapted to be inserted and forced by hammering into the grooves 5 and 6 of the first body 2 and of the second body 3 when the second body 3 is inserted in the first body 2.

Both the first body 2 and the second body 3 further have a pair of collars 12 and 13, respectively, which make it possible to adhere to and rest against a tubular element about which the clamp is positioned.

The locking means 11 are conveniently connected by way of a chain 23 to the second body 3. Alternatively, the means 11 could also be connected to the second body 2, without this impeding the connection between the first and the second body 2 and 3.

The collars 12 and 13 of the first body 2 and of the second body 3 extend at right angles to the surface of the first body 2 and of the second body 3, both upward and downward with respect to the first body 2 and to the second body 3, so as to go to adhere to the tubular element to which the clamp 1 is coupled.

The second body 3 is also C-shaped, similarly to the first body 2, so as to ensure that the clamp 1 can embrace the tubular element about which it is positioned.

The clamp 1 according to the invention can be coupled to a clamp 1 that is arranged adjacent to it by way of coupling means which are constituted by a male pin 15, protruding from the first body 2, which couples in a bushing 16, integral with the first body 2 of a second clamp 1 which is adjacent to the first clamp 1.

The coupling between the two clamps 1 can be rendered fixed by way of a fork-shaped plug that engages in holes 15a and 16a.

Alternatively, the coupling between the two clamps can be obtained so that the two clamps can be rotated with respect to each other so as to obtain an angling between the two tubular elements 20, 21 when the respective clamps 1 are fastened.

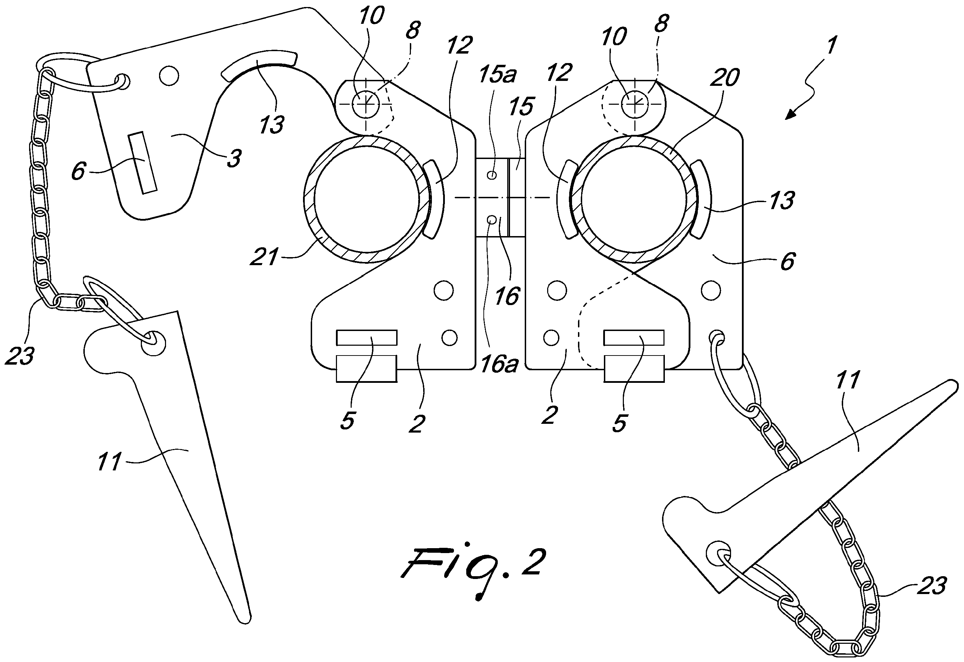

Figure 2 is a plan view of a coupling between the first clamp and the second clamp, with the right-hand clamp in the closed configuration, around the tubular element 20, while the left-hand clamp in the figure is in the open condition around the tubular element 21.

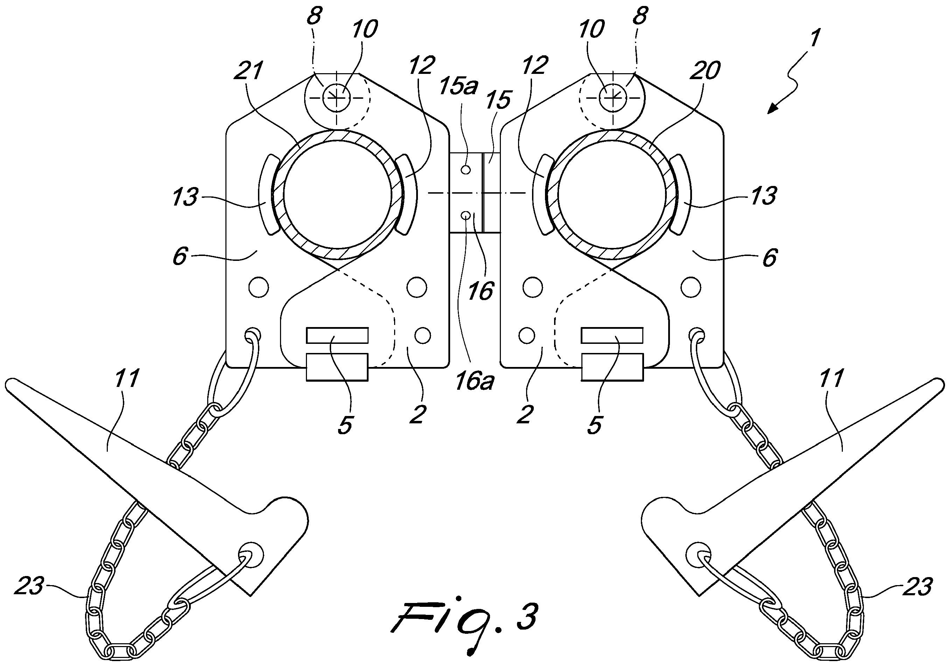

Figure 3 shows the closed configuration of the two clamps 1 around the two tubular elements 20 and 21, with the locking means 11 not yet coupled in the respective grooves 5.

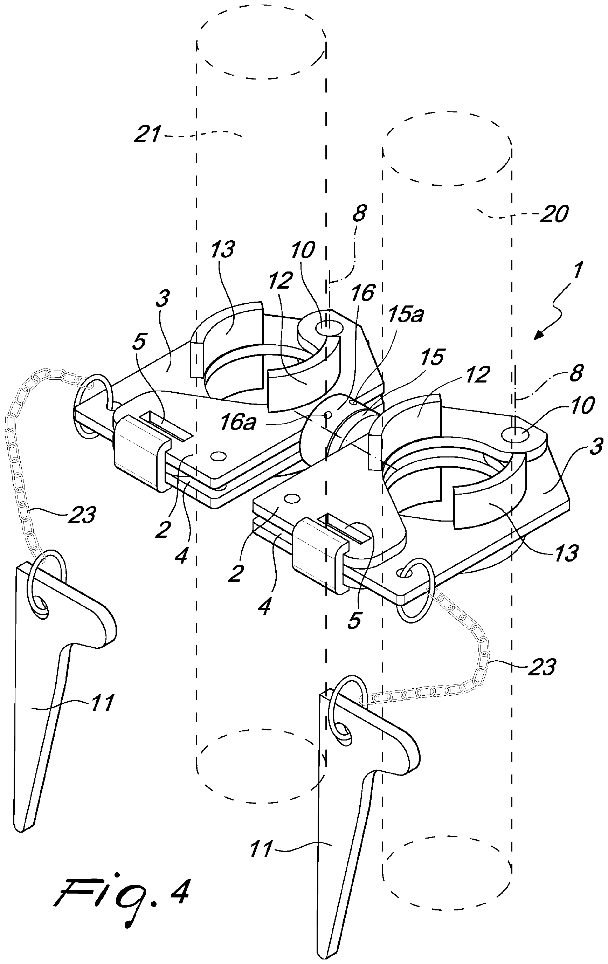

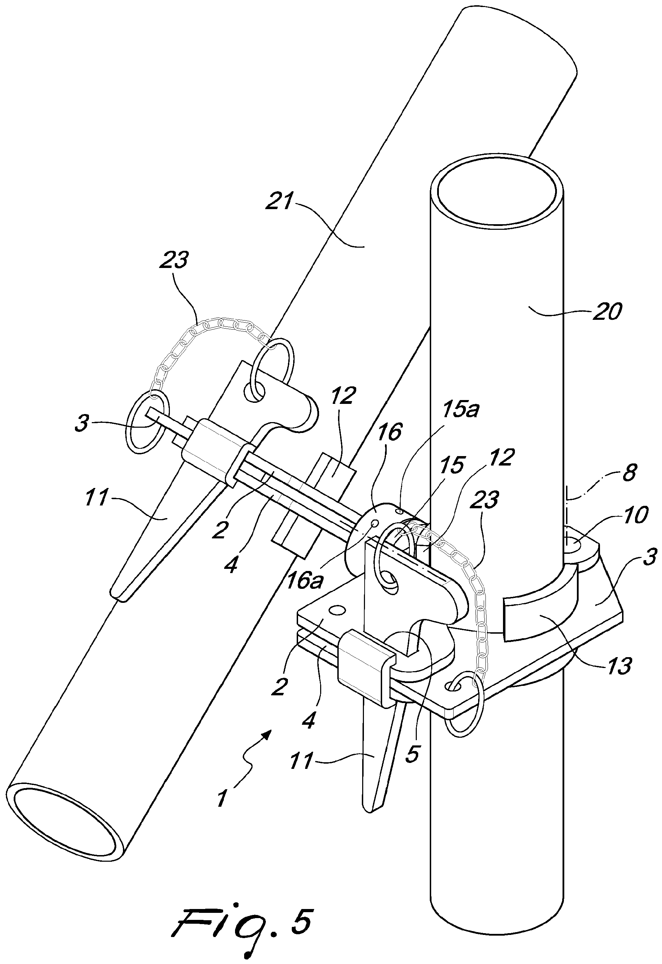

Figure 4 is a perspective view of the clamps according to the invention coupled to the two tubular elements 20 and 21, and Figure 5 shows the rotation of the two clamps 1 with respect to each other so as to have an angling between the two tubular elements 20 and 21.

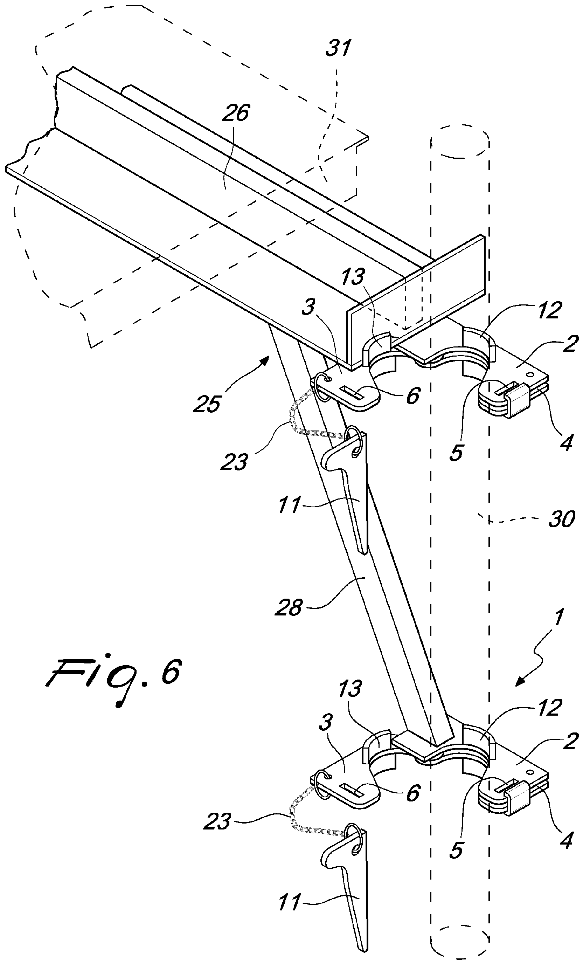

Figure 6 shows the erection of a stand for the building sector, using a clamp 1 according to the invention, wherein the stand is provided by a fixed structure 25 which is constituted by a cross-member 26 which is provided at the respective ends with a clamp 1, and with an angled upright 28 which is provided at one end with a clamp 1 according to the invention. The clamp 1 is adapted to be fastened to a tubular element 30 with the clamp 1 of the cross-member 26, which engages with the tubular element 30 so as to prevent a displacement of the tubular element with respect to the fixed structure 25.

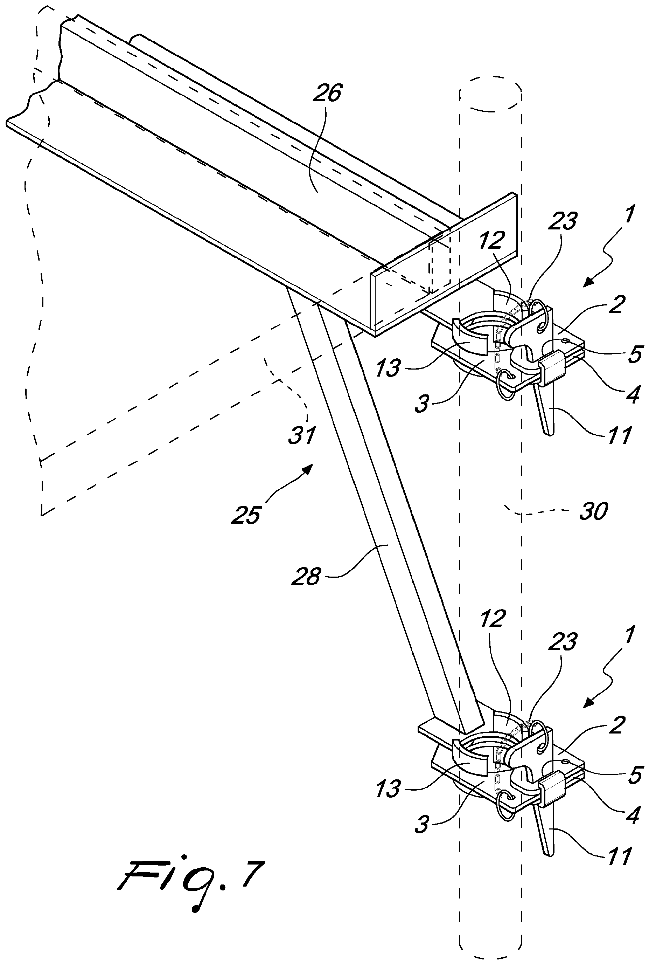

Figure 7 shows the final configuration of the stand according to the invention, wherein the locking means 11 are forced by hammering into the slits of the clamp 1 according to the invention.

The stand structure thus provided can allow the resting of a planar element 31 that acts as a platform.

To this end the stand has, welded or otherwise fixed to the cross-member 26, in a position below the cross-member 26, a plate-like element 27 which is adapted to support the platform 31, and the latter therefore works along its longitudinal structure and not on the end-to-end cantilevered protrusions of conventional platforms.

The stand is therefore provided by way of using four clamps 1, two per side.

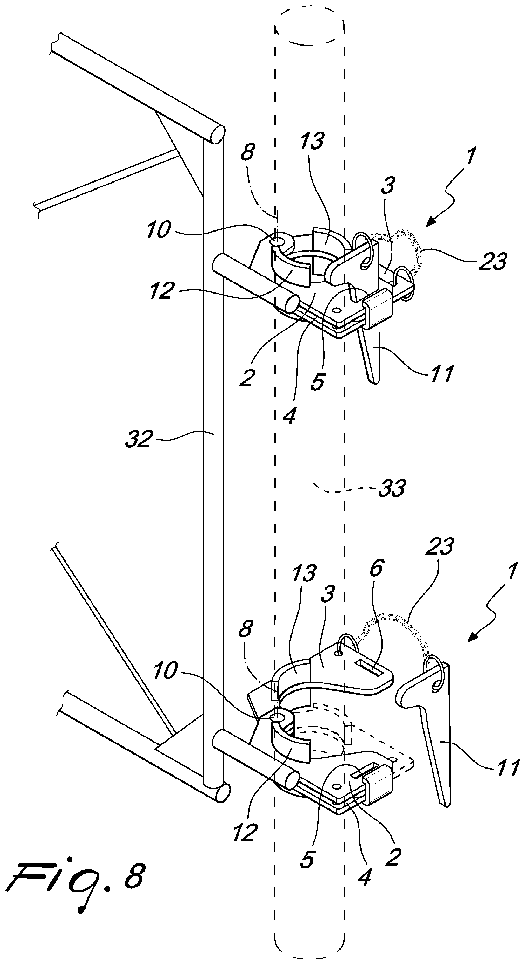

Figure 8 shows an example of providing a railing using a pair of clamps 1 according to the invention, on each side, wherein in this case the fixed structure is a frame element 32 which is constituted by a parallelepiped tubular structure, which is provided with a pair of clamps 1 according to the invention, on each side, which are fastened to a vertical tubular element 33. In this manner, the railing thus obtained can be easily dismantled by removing the tubular element 33 which would present a considerable space occupation for the railing.

The railing, once fastened, also constitutes a retention element for the platform 31.

In order to join tube heads for scaffolding, a first tube 40 is provided with a steel sleeve fitted with a plurality of longitudinal millings 42. The sleeve is conical and is welded to the end of the tube 40.

The coupling between the tube 40 and a second tube 45 occurs by fitting one tube onto another so that the sleeve 41 arranges itself about the second tube 45.

A ring 46, which can slide along the sleeve 41, is provided fitted over the sleeve 41. The sliding of the ring downward and upward is prevented by stop elements 47 which are arranged at the respective ends of the sleeve 41.

The ring 46 therefore enables the coupling between two tubes 40 and 45, without the use of bolts or other fixing means that require tools other than a conventional hammer.

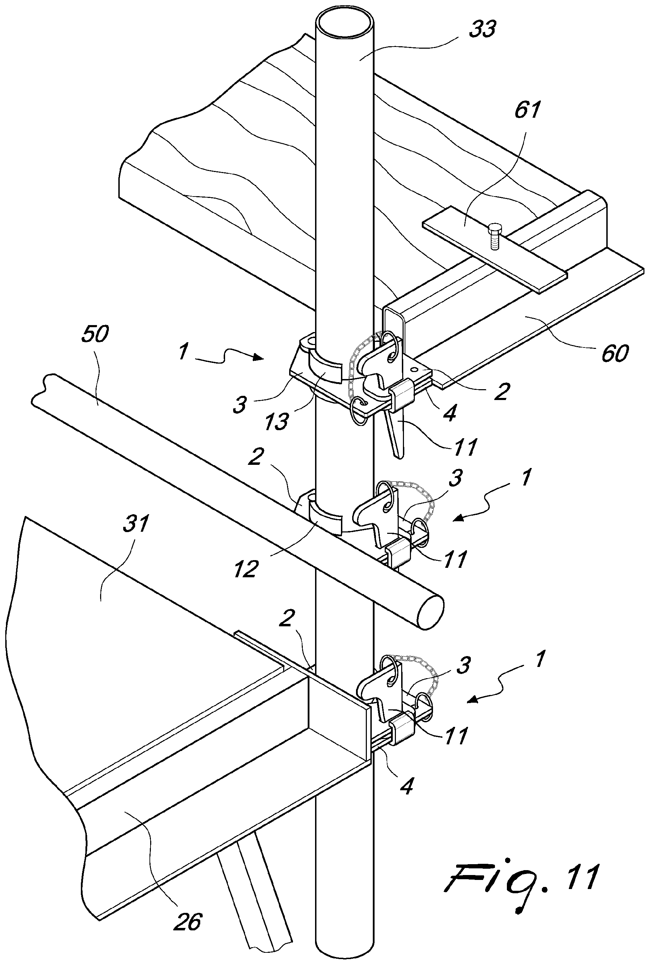

Figure 11 shows a variation of embodiment of the stand according to the present invention, with a platform.

In such variation the platform 31 can be kept immobilized, in addition to with the railing as described previously, with a spacer element 50 fastened to the tubular elements 30 by way of respective end clamps 1.

The spacer element 50 is positioned just above the platform 31 and has the twofold function of stiffening the scaffolding structure provided and of immobilizing the platform 31 in place, preventing its unwanted lifting.

Figure 12 shows an additional variation of embodiment, which can be implemented independently of using the spacer element 50 or the railing.

The variation in question is constituted by a spacer support 60 the function of which is to space the scaffolding apart from a facade against which the scaffolding is erected.

The spacer support 60 is provided with a clamp 1 which is adapted to enable the coupling thereof to the tubular element 30.

The spacer support is provided with a supporting flange for supporting a safety board 62 which is locked by a retention element 61.

The use of a pair of spacer supports 60, one for each tubular element 30, makes it possible to arrange the safety board 62 parallel to the wall of a building, in this manner filling the space that is created between the scaffolding and the wall.

In practice it has been found that the clamp according to the present invention and the stand thus provided by way of the present clamp, as well as the railing, achieve the intended aim and objects, in that the stand/railing can be provided extremely rapidly, and therefore it can be stored in the disassembled condition, with an advantage in terms of space occupation.

The clamp, the stand and the railing thus conceived are susceptible of numerous modifications and variations, all of which are within the scope of the appended claims.

Moreover, all the details may be substituted by other, technically equivalent elements.

In practice, the materials used, as well as the contingent shapes and dimensions, may be any according to the requirements and to the state of the art.

The disclosures in Italian Patent Application No. 102017000018431 (UA2017A001046) from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A clamp (1), particularly for providing stands for use in scaffolding for the building sector, **characterized in that** it comprises a first body (2) and a second body (3) which are adapted to be hinged at one end, said first and second bodies (2, 3) being substantially C-shaped and being adapted to be arranged around a tubular element (20, 21), locking means (11) being provided for locking said first and second bodies (2, 3) to each other around said tubular element (20, 21).

2. The clamp according to claim 1, **characterized in that** said first body (2) is provided with a slot (4) which is adapted to accommodate said second body (3) when said second body (3) is pivoted to said first body (2).

3. The clamp according to claim 1 or 2, **characterized in that** said first and second bodies (2, 3) are provided with respective grooves (5, 6) which are adapted to be arranged so that one is aligned with the other when said first and second bodies (2, 3) are coupled around said tubular element (20, 21), said locking means (11) being adapted to engage in said grooves (5, 6) by forcing.

4. The clamp according to one or more of the preceding claims, **characterized in that** said first and second bodies (2, 3) are pivoted at one end by virtue of pivot means (10).

5. The clamp according to one or more of the preceding claims, **characterized in that** said clamp (1) can be coupled to a clamp (1) that is adjacent thereto, so that said clamps can be angled with respect to each other.

6. The clamp according to one or more of the preceding claims, **characterized in that** said first body (2) and said second body (3) are provided with a collar (12) which is adapted to be placed resting against said tubular element (20, 21).

7. A stand for the building sector, **characterized in that** it comprises a cross-member (26) and a pair of angled uprights (28), said cross-member (26) having, at the respective ends, a clamp (1) according to one or more of the preceding claims, for engagement with a tubular element (30), each one of said angled uprights (28) having, at the free end, a clamp (1) according to one or more of the preceding claims, for fastening around said tubular element (30).

8. The stand according to claim 7, **characterized in that** it comprises a platform (31) which is adapted to be placed resting against the cross-member (26) of said stand.

9. A railing for the building sector, **characterized in that** it comprises a parallelepiped tubular structure (32), which is provided, at two respective ends, with a pair of clamps (1) according to one or more of claims 1 to 6.

10. A scaffolding for the building sector, **characterized in that** it comprises a plurality of stands according to one or more of claims 7 and 8, each stand being coupled to two tubular uprights (30).

11. The scaffolding for the building sector according to claim 10, **characterized in that** it comprises, coupled to a pair of tubular elements (30), a spacer element (50) which is connected to said tubular elements (30) by way of said clamps (1).

12. The scaffolding for the building sector according to one or more of claims 10-11, **characterized in that** it comprises at least one railing according to claim 9.

13. The scaffolding for the building sector according to one or more of claims from 10 to 12, **characterized in that** it comprises, at two tubular uprights (30) which are adapted to be arranged adjacent to a wall of a building, two respective spacer supports (60) which are adapted to support a safety board (62), locked by stop elements (61).
